**Europäisches Patentamt**

**European Patent Office**

**Office européen des brevets**

(11) Numéro de publication: **0 340 123**
A1

## (12) DEMANDE DE BREVET EUROPEEN

(21) Numéro de dépôt: **89420134.2**

(22) Date de dépôt: **14.04.89**

(51) Int. Cl.⁴: **F 16 L 59/16**
F 16 L 59/14, F 16 L 59/08

(30) Priorité: **19.04.88 FR 8805422**

(43) Date de publication de la demande:
**02.11.89 Bulletin 89/44**

(84) Etats contractants désignés:
**AT BE DE ES GB IT NL SE**

(71) Demandeur: **Meynieu, Jean-Francis**
**25 rue du Lac**
**F-69540 Irigny (FR)**

(72) Inventeur: **Meynieu, Jean-Francis**
**25 rue du Lac**
**F-69540 Irigny (FR)**

(74) Mandataire: **Laurent, Michel et al**
**Cabinet LAURENT 20, rue Louis Chirpaz B.P. 32**
**F-69131 Ecully Cédex (FR)**

(54) **Elément tubulaire isolé pour la réalisation d'installations aériennes véhiculant des fluides, procédé pour sa réalisation et installations constituées de tels éléments.**

(57) Elément tubulaire isolé se présentant sous la forme d'un tube (1) de longueur déterminée, recouvert d'une enveloppe externe (6) assurant sa protection, une couche d'isolation interne étant disposée entre ladite enveloppe externe (6) et le tube interne (1), l'enveloppe externe (6) et l'isolant intermédiaire (2) ne recouvrant pas le tube interne (1) sur toute sa longueur de manière à laisser à chaque extrémité une partie dénudée permettant la liaison des tubes élémentaires entre eux pour réaliser l'installation et/ou l'interposition d'accessoires divers entre deux tubes consécutifs.

Dans cet élément :
- l'enveloppe externe (6) est constituée d'un manchon métallique continu, obtenu par enroulement en spirale d'une feuille de métal dont les bords consécutifs sont solidarisés par agraphage mutuel ;
- des éléments de centrage (4) de l'enveloppe (6) par rapport au tube interne (1) sont répartis régulièrement sur la longueur de ce dernier et à espaces déterminés ;
- le blocage et le maintien de l'enveloppe (6) autour du tube interne (1) est obtenu au moyen d'une couche de matière expansée (5), injectée directement en-dessous de ladite enveloppe (6).

FIG.1

Bundesdruckerei Berlin

## Description

### ELEMENT TUBULAIRE ISOLE POUR LA REALISATION D'INSTALLATIONS AERIENNES VEHICULANT DES FLUIDES, PROCEDE POUR SA REALISATION ET INSTALLATIONS CONSTITUEES DE TELS ELEMENTS

La présente invention concerne un nouveau type d'élément tubulaire isolé permettant la réalisation d'installations aériennes véhiculant des fluides, et plus particulièrement des fluides à température élevée ; elle a trait également à un procédé permettant la réalisation de tels éléments ainsi qu'aux installations qu'ils permettent de réaliser.

Dans la suite de la description, l'invention sera décrite plus particulièrement pour un élément tubulaire utilisé pour véhiculer des fluides à température élevée, mais il est évident que cela n'est pas limitatif et que le même concept pourrait être mis en oeuvre pour la réalisation d'installations véhiculant des fluides à basse température (inférieure à 90°C), les seules modifications résidant dans la nature du matériau isolant employé et de son épaisseur qui pourra, dans ce cas, être plus simple et moins onéreux.

A ce jour, dans le domaine des installations aériennes constituées de tuyauteries et qui permettent de véhiculer des fluides à haute température, installations que l'on trouve par exemple dans le domaine de la chimie, l'isolation desdites tuyauteries est 22le plus souvent réalisée sur le site même après soudure des différentes tuyauteries entre elles et mise en place des accessoires nécessaires au fonctionnement de l'installation (vannes..). Les travaux d'isolation ne sont donc réalisés qu'après avoir effectué les contrôles techniques, ce qui rallonge la durée des chantiers et retarde la mise en route.

Diverses autres solutions ont été depuis fort longtemps proposées pour résoudre ces problèmes. Ainsi, comme cela ressort de l'US-A-2 857 937, il a été proposé de réaliser des éléments tubulaires qui se présentent sous la forme d'un tube de longueur déterminée, recouvert d'une enveloppe externe assurant sa protection et qui comporte une couche d'isolation interne disposée entre ladite enveloppe externe et le tube interne. Dans la solution décrite dans ce document, l'enveloppe externe et l'isolant intermédiaire ne recouvrent pas le tube interne sur toute sa longueur de manière à laisser à chaque extrémité une partie dénudée permettant la liaison des tubes élémentaires entre eux pour réaliser l'installation et/ou l'interposition d'accessoires divers entre deux tubes consécutifs. Une telle solution présente cependant un certain nombre d'inconvénients par le fait qu'il est difficile de réaliser des éléments de grande longueur compte tenu des difficultés d'avoir un centrage parfait entre le tube interne et la gaine extérieure. De plus, les ensembles ainsi réalisés sont complexes à fabriquer et manquent de résistance à l'écrasement et à la compression.

L'invention vise à résoudre ces problèmes et a trait, en résumé, à un perfectionnement apporté à de tels types d'éléments tubulaires, de longueurs droites notamment, dont l'isolation est réalisée entièrement en atelier et qui permettent d'obtenir des installations aériennes véhiculant des fluides dans lesquelles seuls les accessoires et les zones de liaison entre les éléments tubulaires élémentaires seront isolés sur le chantier, cette isolation étant faite également à l'aide d'ensembles démontables, également fabriqués et isolés en atelier et qui sont mis en place, après vérification et contrôle technique, lesdits ensembles pouvant par ailleurs être démontés pour effectuer des vérifications ou entretiens périodiques.

D'une manière générale, l'élément tubulaire conforme à l'invention se présente sous la forme d'un tube de longueur déterminée, recouvert d'une enveloppe externe assurant sa protection, et comportant une couche d'isolation interne disposée entre ladite enveloppe externe et le tube interne, ladite enveloppe externe et l'isolant intermédiaire ne recouvrant pas le tube interne sur toute sa longueur de manière à laisser à chaque extrémité une partie dénudée permettant la liaison des tubes élémentaires entre eux pour réaliser l'installation et/ou l'interposition d'accessoires divers entre deux tubes consécutifs.

L'élément conforme à l'invention se <u>caractérise</u> en ce que :
- l'enveloppe externe est constituée d'un manchon métallique continu, obtenu par enroulement en spirale d'une feuille de métal dont les bords consécutifs sont solidarisés par agraphage mutuel ;
- des éléments de centrage de l'enveloppe par rapport au tube interne sont répartis régulièrement sur la longueur de ce dernier et à espaces déterminés ;
- le blocage et le maintien de l'enveloppe autour du tube interne est obtenu au moyen d'une couche de matière expansée injectée directement en-dessous de ladite enveloppe.

Avantageusement et en pratique, s'il peut être envisagé notamment dans le cas où l'élément tubulaire conforme à l'invention est utilisé pour l'isolation de tubes à l'intérieur desquels circule un fluide à faible température (inférieure à 90°C), auquel cas la couche de mousse de blocage de l'enveloppe externe contre le tube peut elle-même servir de couche isolante et s'étendre sur tout l'espace situé entre l'enveloppe et ledit tube, selon un mode préférentiel conforme à l'invention selon lequel les éléments tubulaires sont utilisés pour l'isolation d'installations dans lesquelles circulent des fluides à température élevée (plusieurs centaines de degrés), le tube interne sera recouvert d'une couche (coquille) isolante d'épaisseur déterminée (laine de verre, de roche, ou toute autre matière isolante), ladite couche étant appliquée contre le tube interne au moyen d'une colle résistant à haute température et étant recouverte par un feuillard permettant de faire bloc avec le tube caloporteur. De préférence, dans ce mode de réalisation, une feuille d'aluminium réflectrice est, préalablement à la mise en place de la gaine extérieure et liaison définitive, enroulée autour de la couche d'isolation selon la technique "spirale". Dans un tel cas, les éléments assurant l'écartement et le centrage de l'enveloppe externe par rapport au noyau interne sont constitués de bagues réparties régulièrement sur toute la longueur du tube élémentaire et comportant des picots. La couche de matière expansée assurant la liaison de l'ensemble précédemment défini avec l'enveloppe extérieure constituée d'un enroulement à spirale de feuilles métalliques agraphées bord à bord est constituée par exemple par une couche de mousse de polyuréthane expansée.

Le procédé de réalisation d'un tel tube élémentaire ressort de la description qui précède et consiste, d'une manière générale, à entourer le tube interne avec une couche de matière isolante, à assurer le maintien de ladite couche autour du tube, à positionner les éléments de centrage et d'écartement autour de l'ensemble ainsi formé que l'on recouvre alors de la gaine spiralée extérieure, l'injection de matière expansable étant ensuite réalisée pour assurer le maintien et le blocage définitif de ladite gaine.

Les installations réalisées à partir de tels tubes élémentaires se caractérisent en ce que ces tubes sont soudés bout à bout par leur partie dénudée avec éventuellement incorporation d'accessoires entre deux tubes (vannes, robinets..), les zones dénudées ainsi reliées étant, après réalisation complète de l'installation, elles-mêmes recouvertes de capots protecteurs appropriés et isolants, également préfabriqués.

L'invention et les avantages qu'elle apporte seront cependant mieux compris grâce à l'exemple de réalisation donné ci-après à titre indicatif mais non limitatif, et qui est illustré par les schémas annexés dans lesquels :

- la figure 1 est une vue en élévation, partiellement éclatée, d'un élément tubulaire isolé conforme à l'invention utilisé notamment pour des installations véhiculant des fluides à température élevée ;

- la figure 2 est une coupe transversale montrant la section d'un tel élément tubulaire ;

- la figure 3 est une vue partielle de la zone A de la figure 1 illustrant la manière dont est assurée la liaison de l'enveloppe externe autour de l'isolant interne et ce, conformément à l'invention, ainsi que la structure de ladite enveloppe externe ;

- la figure 4 illustre schématiquement, vue en élévation et en coupe partielle, les possibilités de réalisation d'une installation conforme à l'invention comportant des accessoires divers sur sa longueur ainsi qu'une dérivation et un coude ;

- les figures 5 à 9 illustrent schématiquement en perspective les boitiers additionnels utilisés pour réaliser une installation conforme à l'invention en vue d'isoler, après réalisation de l'installation, les parties dénudées et/ou les accessoires rapportés en cours de réalisation de l'installation.

Dans la suite de la description, comme dit précédemment, l'invention sera décrite pour un tube isolé permettant la réalisation d'installations aériennes véhiculant des fluides à haute température, mais il est évident que cela n'est pas limitatif et que dans le cas où l'installation pourrait véhiculer des fluides à faible température (inférieure à 90°C), il suffirait simplement de modifier la couche isolante prévue entre le tube interne et l'enveloppe externe, voire même de la supprimer totalement, la matière expansée de liaison entre le tube interne et l'enveloppe externe assurant par elle-même ladite isolation.

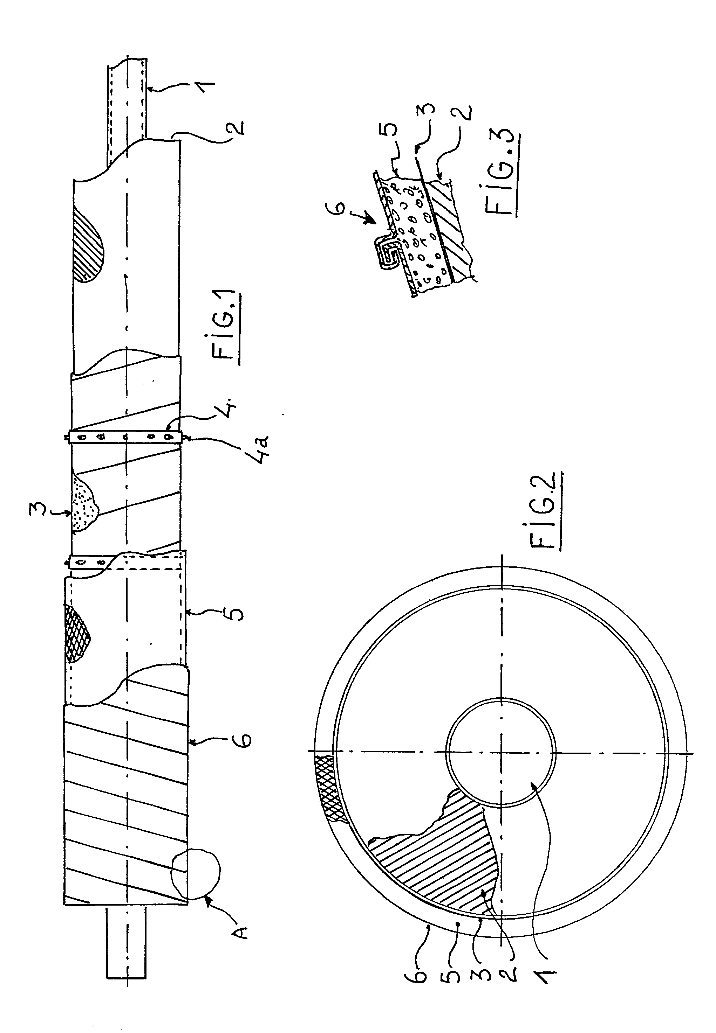

Si l'on se reporte aux figures annexées et plus particulièrement aux figures 1 à 3, l'élément tubulaire isolé conforme à l'invention, et le procédé permettant l'obtention d'un tel élément, se compose essentiellement d'un tube interne (1), de longueur déterminée. A la périphérie de ce tube (1) est, de préférence, appliquée une couche d'une colle résistant à haute température qui sert à maintenir des coquilles de laine de roche (2), servant d'isolant proprement dit ou tout autre matériau équivalent. Ces coquilles (2) peuvent éventuellement être serrées mécaniquement par un feuillard afin de faire vraiment bloc avec le tube caloporteur (1). Par ailleurs, sur la couche d'isolant (2) (en laine de roche par exemple) en fonction des qualités d'isolation que l'on désire obtenir, on peut appliquer une feuille d'aluminium (3) (réflecteur thermique) enroulée en spirale autour de l'isolant (2). Autour de cette enveloppe en aluminium (3), ou directement autour de l'isolant fibreux (2) si la couche d'aluminium est absente, on dispose, à intervalles réguliers, des colliers (4) dits "colliers centreurs" qui comportent sur leur périphérie des ergots (4a) de hauteur déterminée, espacés réguliè rement les uns des autres. La hauteur des ergots (4a) est égale à la différence du diamètre du tube protecteur extérieur (6) avec le diamètre du tube isolé revêtu de la feuille aluminium ci-dessus décrite. De cette manière, on réalise un parfait centrage des différents éléments.

L'ensemble ainsi réalisé est alors introduit à l'intérieur d'un cylindre protecteur métallique (6), par exemple en acier galvanisé, en aluminium ou tout autre matériau en feuille. Ce cylindre protecteur métallique (6) est, conformément à l'invention, de préférence réalisé par enroulement en spirale d'une bande métallique. La liaison bord à bord de ladite spirale est obtenue ainsi que cela ressort de la figure 3, par agraphage des deux bords consécutifs. On obtient ainsi une gaine qui présente une souplesse relative facilitant sa mise en place mais qui surtout, est non seulement économique à fabriquer mais également présente une très grande résistance à la compression. Le diamètre du tube protecteur (6) est, comme dit précédemment, plus grand que le diamètre obtenu après la pose de l'écran réflecteur (3) en aluminium et ce, afin de pouvoir injecter dans l'espace ainsi prévu une matière expansable (5), par exemple une mousse de polyuréthane qui, lors de l'expansion, permet d'assurer une liaison parfaite entre l'isolant interne (2,3) et le revêtement externe (6) (voir figures 2 et 3). L'injection de la mousse de polyuréthane a pour fonction essentielle de rendre solidaire l'ensemble compte-tenu du fait que lors de l'expansion, il se produit des tensions dans tous les sens, assurant un blocage et l'immobilisation parfaite non seulement de la gaine extérieure, mais également de l'isolant intermédiaire autour du tube caloporteur.

De plus, cette couche de mousse améliore encore l'isolation.

Un tel élément tubulaire présente donc une parfaite isolation et une parfaite étanchéité aux intempéries.

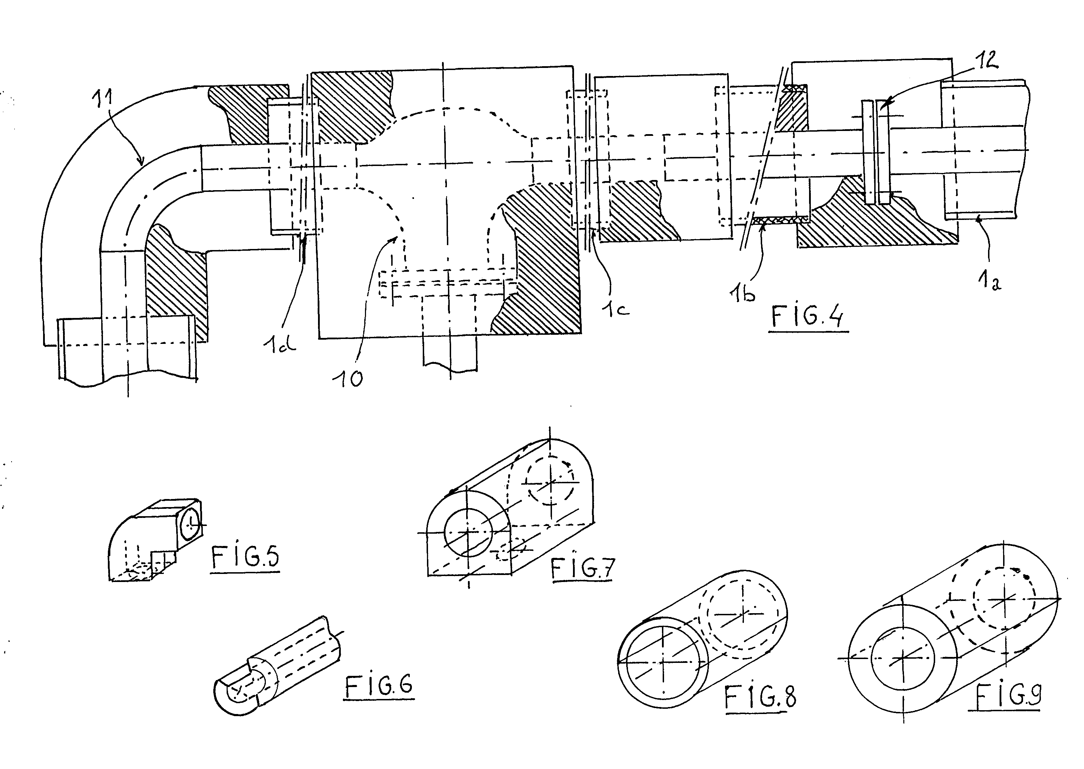

Grâce à un tel élément tubulaire isolé, il est possible de réaliser de nombreux types d'installations pouvant comporter sur leur longueur des accessoires divers, présenter des coudes et des piquages éventuels. Des différentes possibilités permises par un tel élément tubulaire isolé ressortent de la figure 4 où, volontairement, les parties rectilignes de l'installation ont été raccourcies.

Ainsi, si l'on considère cette figure en partant de la droite, dans cette installation, le premier élément tubulaire (1a) est raccordé au second élément tubulaire (1b) par l'intermédiaire de brides (10). L'extrémité de l'élément tubulaire (1b) est raccordée directement à l'extrémité d'un élément (1c) de manière à former une partie rectiligne continue. L'élément (1c) est associé à un piquage (12) réalisé sur sa longueur et son extrémité est raccordée à un élément (1d), lui-même prolongé par une partie en forme de coude (11).

Il ressort clairement de cet exemple de réalisation que l'on peut donc réaliser grâce aux éléments tubulaires isolés conformes à l'invention l'ensemble d'une installation dans laquelle seules certaines parties minoritaires (zone de jonction, adaptation d'accessoires, coudes) ne sont pas isolées. Le contrôle technique peut donc être fait sur ces zones qui sont directement accessibles et il peut être envisagé, après réalisation de ce contrôle, de mettre immédiatement l'installation en marche sans même que les zones de jonction soient isolées, étant donné la très faible déperdition produite (puisque 90% d'installations est isolé). Pour assurer l'isolation finale dans les coudes, zones de jonction, piquages, on adapte sur ces parties des boitiers isolants tels qu'il ressort des figures 5 à 9.

Ces boitiers isolants sont préparés également en atelier et sont composés d'une enveloppe extérieure métallique renfermant une couche d'isolant similaire à celui prévu sur l'ensemble de l'installation, la forme de ces modules étant fonction des zones à protéger. Ainsi, comme cela est représenté à la figure 5, on peut réaliser un module isolant protégeant les coudes. La figure 6 illustre un boitier isolant comportant une charnière et destiné à être rapporté sur les extrémités délinées consécutives de deux tubes conformes à l'invention dans les zones de jonction. Ce boitier permet donc d'effectuer des contrôles a postériori.

La figure 7 illustre une forme de réalisation d'un boitier pour une zone comportant un piquage, la figure 8 un boitier démontable pour les soudures bout à bout, et la figure 9, un boitier également démontable pour les zones comportant des brides.

Grâce aux éléments tubulaires conformes à l'invention, il est donc possible d'obtenir des installations parfaitement isolées. Par ailleurs, l'isolation des parties dénudées, les accessoires.. au moyen de boitiers démontables comporte un avantage important dans les travaux d'entretien de contrôle technique sur les installations, en ce sens qu'il n'y a plus besoin de démonter toute l'isolation pour radiographier les soudures ou les coudes. Le seul démontage du boitier permet donc de réaliser dans de très bonnes conditions ces travaux.

Par rapport aux solutions antérieures pour la réalisation d'installations aériennes véhiculant des fluides, les éléments tubulaires conformes à l'invention présentent de très nombreux avantages par le fait que dans le système traditionnel, les travaux d'isolation ne pouvaient être réalisés qu'après tous les contrôles, ce qui rallongeait donc la durée des chantiers. En revanche, grâce à l'invention, il est possible d'effectuer la mise en route immédiatement après les épreuves de contrôle étant donné qu'environ 90 % de l'ensemble de l'installation est déjà isolé. Ceci permet un gain de production immédiat à l'utilisateur final de l'installation industrielle.

Par ailleurs, de tels éléments tubulaires diminuent considérablement les frais de transport étant donné qu'antérieurement, les coquilles isolantes et les tubes eux-mêmes étaient véhiculés séparément et que donc, le vide à l'intérieur des coquilles (2) était perdu alors que, grâce à l'invention, il est rempli du tube interne.

Les éléments conformes à l'invention assurent par ailleurs une étanchéité parfaite aux intempéries et surtout les travaux d'isolation sont réalisés avec une très grande sécurité, étant donné qu'ils sont effectués en atelier et à l'abri des intempéries par du personnel qualifié, ce qui n'est pas toujours le cas lorsque l'isolation se réalise directement sur le chantier.

Les seules précautions particulières à prendre pour la mise en oeuvre de tels éléments tubulaires résident dans une simple adaptation dans les méthodes de manutention et dans le fait qu'en ce qui concerne les tuyauteries comportant des supports fixes soudés, il conviendra de découper une lanière dans l'isolation afin de pouvoir souder le support, les parties vides entre la soudure et l'isolation étant bien entendu ensuite reconstituées.

Bien entendu, l'invention n'est pas limitée à l'exemple de réalisation décrit précédemment mais elle en couvre toutes les variantes réalisées dans le même esprit. Ainsi, par exemple un tel type de matériau tubulaire pourrait être utilisé pour d'autres types d'installations que celles véhiculant des fluides, par exemple comme gaine protectrice dans des installations comportant des tubes transportant des poudres chaudes, comme élément protecteur notamment contre l'incendie, pour des câbles électriques, voire même pour d'autres applications et ce, grâce à la nature des matériaux entrant dans la constitution d'un tel élément tubulaire. De plus, il est évident que la couche d'isolant intermédiaire peut être choisie en fonction des applications, cette couche pouvant être à base de tout matériau approprié, tel que laine de verre ou de roche, amiante, fibres céramiques.. .

## Revendications

1/ Elément tubulaire isolé se présentant sous la forme d'un tube (1) de longueur déterminée, recouvert d'une enveloppe externe (6) assurant sa protection, une couche d'isolation interne étant disposée entre ladite enveloppe externe (6) et le tube interne (1), l'enveloppe externe (6) et l'isolant intermédiaire (2) ne recouvrant pas le tube interne (1) sur toute sa longueur de manière à laisser à chaque extrémité une partie dénudée permettant la liaison des tubes élémentaires entre eux pour réaliser l'installation et/ou l'interposition d'accessoires divers entre deux tubes consécutifs, caractérisé en ce que :
- l'enveloppe externe (6) est constituée d'un manchon métallique continu, obtenu par enroulement en spirale d'une feuille de métal dont les bords consécutifs sont solidarisés par agraphage mutuel ;
- des éléments de centrage (4) de l'enveloppe (6) par rapport au tube interne (1) sont réparties régulièrement sur la longueur de ce dernier et à espaces déterminés ;
- le blocage et le maintien de l'enveloppe (6) autour du tube interne (1) est obtenu au moyen d'une couche de matière expansée (5), injectée directement en-dessous de ladite enveloppe (6).

2/ Elément tubulaire selon la revendication 1, caractérisé en ce que la couche (5) assurant le blocage et le maintien de l'enveloppe (6) autour du tube (1) s'étend depuis ledit tube (1) jusqu'à l''enveloppe (6) et sert elle-même d'isolant.

3/ Elément tubulaire selon la revendication 1, caractérisé en ce que la couche expansée (5) assurant le blocage et le maintien de l'enveloppe (6) est injectée autour d'une couche isolante (2) disposée préalablement contre le tube interne (1).

4/ Elément tubulaire selon la revendication 3, caractérisé en ce que la couche isolante (2) est elle-même recouverte d'une feuille d'aluminium réflectrice (3).

5/ Procédé pour la réalisation d'un élément tubulaire isolé selon l'une des revendications 1 à 5, caractérisé en ce qu'il consiste à entourer le tube interne (1) avec une couche de matière isolante (2), à assurer le maintien de la dite couche (2) autour du tube (1), à positionner des éléments de centrage et d'écartement (4) autour de l'ensemble ainsi formé que l'on recouvre alors d'une gaine spiralée (6) externe, puis à injecter une matière expansable (5) entre ladite gaine (6) et la surface de l'isolant (2), afin d'assurer le maintien et le blocage définitif de ladite gaine (6).

6/ Installation constituée d'éléments tubulaires selon l'une des revendications 1 à 5, caractérisée en ce que les tubes élémentaires de ladite installation sont soudés bout à bout par leur partie dénudée avec éventuellement incorporation d'accessoires entre deux tubes, les zones dénudées ainsi reliées étant, après réalisation complète de l'installation, elles-mêmes recouvertes de capots protecteurs appropriés et isolants, également préfabriqués.

3

A

6          5          4.          4a          2          1

FIG.1

6
5
3
2
1

FIG.2

6
5
3
2

FIG.3

EP 0 340 123 A1

Fig.4

Fig.5

Fig.6

Fig.7

Fig.8

Fig.9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y,D | US-A-2 857 931 (W.R. LAWTON) * Colonne 4, lignes 35-41; figures * | 1,2 | F 16 L 59/16 F 16 L 59/14 F 16 L 59/08 |
| A | | 5,6 | |
| | --- | | |
| Y | FR-A-2 257 059 (INSTA-FOAM PRODUCTS, INC.) * Page 2, ligne 9 - page 3, ligne 5; page 6, lignes 8-29; figures * | 1,2 | |
| A | | 2,5 | |
| | --- | | |
| A | DE-A-3 043 450 (H. SCHMITT et al.) * Pages 4,5; figures * | 1-3,5,6 | |
| | --- | | |
| A | DE-A-2 203 312 (WREDE & NIEDECKEN GmbH) * Revendications 1,2; figures * | 1-3 | |
| | ----- | | |

DOMAINES TECHNIQUES RECHERCHES (Int. Cl.4)

F 16 L

Le présent rapport a été établi pour toutes les revendications

| Lieu de la recherche | Date d'achevement de la recherche | Examinateur |
|---|---|---|
| LA HAYE | 04-07-1989 | BARTSCH A.W. |